(19) Europäisches Patentamt
European Patent Office
Office européen des brevets

(11) **EP 2 936 455 B1**

(12) **EUROPÄISCHE PATENTSCHRIFT**

(45) Veröffentlichungstag und Bekanntmachung des Hinweises auf die Patenterteilung:
**12.12.2018 Patentblatt 2018/50**

(21) Anmeldenummer: **13811128.1**

(22) Anmeldetag: **18.12.2013**

(51) Int Cl.:
***G07D 7/12*** *(2016.01)*

(86) Internationale Anmeldenummer:
**PCT/EP2013/003830**

(87) Internationale Veröffentlichungsnummer:
**WO 2014/095055 (26.06.2014 Gazette 2014/26)**

(54) **SENSOR UND VERFAHREN ZUR PRÜFUNG VON WERTDOKUMENTEN**

SENSOR AND METHOD FOR VERIFYING VALUE DOCUMENTS

DÉTECTEUR ET PROCÉDÉ DE VÉRIFICATION DE DOCUMENTS DE VALEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.12.2012 DE 102012025263**

(43) Veröffentlichungstag der Anmeldung:
**28.10.2015 Patentblatt 2015/44**

(73) Patentinhaber: **Giesecke+Devrient Currency Technology GmbH**
**81677 München (DE)**

(72) Erfinder:
- **DECKENBACH, Wolfgang**
  **83135 Schechen (DE)**
- **RAUSCHER, Wolfgang**
  **94365 Parkstetten (DE)**
- **KERSTEN, Peter**
  **83620 Feldkirchen Westerham (DE)**

(56) Entgegenhaltungen:
**DE-A1- 10 113 268     DE-A1-102004 016 249**
**FR-A1- 2 864 666     US-A1- 2007 145 293**
**US-A1- 2010 102 250**

**Beschreibung**

Die Erfindung betrifft einen Sensor und ein Verfahren zur Prüfung von Wertdokumenten sowie eine Vorrichtung, die den Sensor aufweist.

Zur Prüfung von Wertdokumenten werden üblicherweise Sensoren verwendet, mit denen die Art der Wertdokumente bestimmt wird und/oder mit denen die Wertdokumente auf Echtheit und/oder auf ihren Zustand geprüft werden. Derartige Sensoren werden z.B. zur Prüfung von Banknoten, Schecks, Ausweisen, Kreditkarten, Scheckkarten, Tickets, Gutscheinen und dergleichen verwendet. Die Wertdokumente werden in einer Vorrichtung zur Wertdokumentbearbeitung geprüft, in der, je nach den zu prüfenden Wertdokumenteigenschaften, einer oder mehrere unterschiedliche Sensoren enthalten sind. Zur Prüfung der Wertdokumente werden diese üblicherweise an dem ortsfesten Sensor vorbeitransportiert.

Ein zu prüfendes Wertdokument kann einen oder mehrere Lumineszenzstoffe aufweisen, von denen zum Beispiel die Abklingzeit des zeitlichen Intensitätsverlaufs der Lumineszenz und/oder spektrale Eigenschaften der Lumineszenz geprüft werden. Beispielsweise offenbart die DE10113268 A1 die spektralen Lumineszenzlinien bei verschiedenen Wellenlängen dadurch auszuwerten, dass das Verhältnis der Flächen unter den bei verschiedenen Wellenlängen detektierten Spektrallinien gebildet wird.

Die Lumineszenzstoffe des Wertdokuments können bereichsweise oder vollflächig auf dem Wertdokument vorhanden sein. Zur Überprüfung der Abklingzeit der Lumineszenz ist es bekannt, Wertdokumente mit Lichtpulsen zu beleuchten und, in der Dunkelphase zwischen den Lichtpulsen, die Lumineszenzintensität des Wertdokuments zu verschiedenen Zeiten nach Ende des Beleuchtungspulses zu detektieren. Aus dem zeitlichen Abklingen der Lumineszenzintensität wird dann z.B. die Abklingzeit der Lumineszenz bestimmt.

Die DE10113268 A1 beschreibt verschiedene Möglichkeiten, den zeitlichen Verlauf der Lumineszenzintensität eines Wertdokuments auszuwerten. Nachteilig ist bei der bisherigen Wertdokumentprüfung, dass, im Fall einer großen Transportgeschwindigkeit des Wertdokuments, ein zeitlicher Intensitätsverlauf der Lumineszenz detektiert wird, der verfälscht ist im Vergleich zu einem statisch detektierten Intensitätsverlauf. Bei hohen Transportgeschwindigkeiten des Wertdokuments kann die Abklingzeit der Lumineszenz daher nur ungenau bestimmt werden.

Eine Aufgabe der vorliegenden Erfindung ist es, einen Sensor und ein Verfahren zur Prüfung von Wertdokumenten bereitzustellen, wodurch der zeitliche Verlauf der Lumineszenz des Wertdokuments bei großen Transportgeschwindigkeiten mit verbesserter Genauigkeit überprüft werden kann. Diese Aufgabe wird durch die Gegenstände der Ansprüche 1 und 11 gelöst. In davon abhängigen Ansprüchen sind vorteilhafte Weiterbildungen und Ausgestaltungen der Erfindung angegeben.

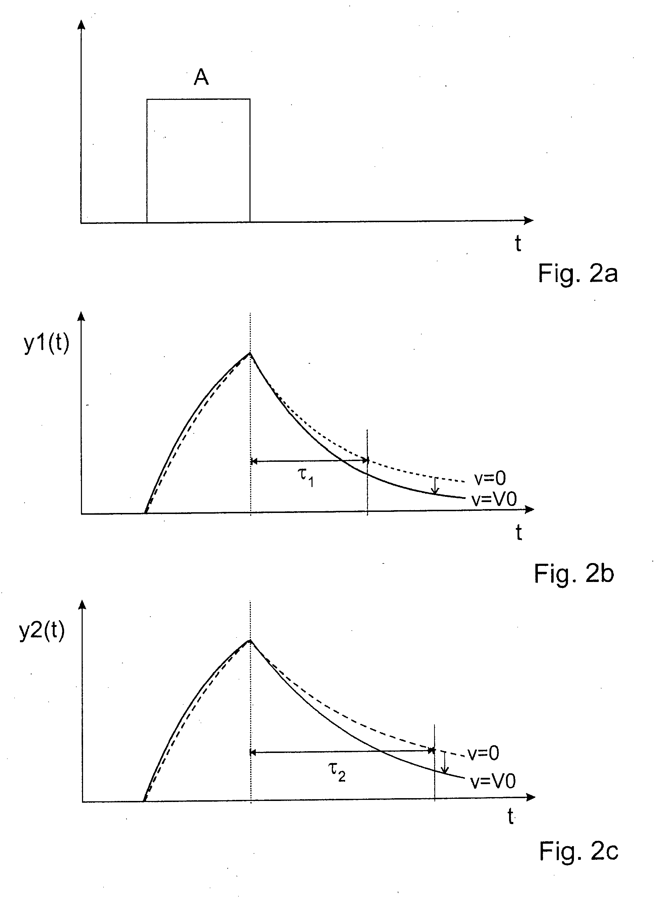

Zur Prüfung des Wertdokuments wird das Wertdokument entlang einer Transportrichtung x relativ zu einem Sensor transportiert, der zur Echtheitsprüfung des Wertdokuments eingerichtet ist. Das Wertdokument wird durch eine Anregungsquelle zur Lumineszenz angeregt, z.B. durch Beleuchten des Wertdokuments mittels einer Beleuchtungseinrichtung. Statt einer Anregung mittels Licht können aber auch andere physikalische Anregungsformen verwendet werden. Die Lumineszenz, welches das mit dem Anregungslicht beleuchtete Wertdokument emittiert, wird durch den Sensor detektiert. Als Reaktion auf die Lumineszenzanregung der Anregungsquelle emittiert das Sicherheitsmerkmal sowohl eine erste Lumineszenz bei einer ersten Wellenlänge als auch eine zweite Lumineszenz bei einer von der ersten Wellenlänge verschiedenen zweiten Wellenlänge. Gegebenenfalls werden auch weitere Lumineszenzen angeregt. Die erste Lumineszenz weist als Funktion der Zeit t einen ersten Intensitätsverlauf $y1(t)$ mit einer ersten charakteristische Zeitkonstante $\tau 1$ auf und die zweite Lumineszenz weist als Funktion der Zeit t einen zweiten Intensitätsverlauf $y2(t)$ mit einer zweiten charakteristischen Zeitkonstante $\tau 2$ auf. Die Lumineszenzanregung wird z.B. durch einen Anregungspuls A erreicht, den die Anregungsquelle auf das Wertdokument richtet, vgl. Figur 2a. Der erste Intensitätsverlauf $y1(t)$ und der zweite Intensitätsverlauf $y2(t)$ weisen dann üblicherweise jeweils während des Anregungspulses A der Lumineszenzanregung ein Anklingen ihrer Lumineszenzintensität auf und ab dem Ende des Anregungspulses der Lumineszenzanregung einen Abklingen ihrer Lumineszenzintensität.

Das Wertdokument weist ein Sicherheitsmerkmal auf, das einen oder mehrere Lumineszenzstoffe enthält, die Lumineszenz emittieren. Innerhalb des Detektionsbereichs, in dem die Lumineszenz detektiert wird, weist der Lumineszenzstoff, der die erste Lumineszenz emittiert, vorzugsweise dieselbe räumliche Verteilung auf wie der Lumineszenzstoff, der die zweite Lumineszenz emittiert. Der Lumineszenzstoff, der die erste Lumineszenz emittiert, kann ein anderer Lumineszenzstoff sein als der Lumineszenzstoff, der die zweite Lumineszenz emittiert. Die erste und zweite Lumineszenz kann aber auch durch denselben Lumineszenzstoff emittiert werden. Beispielsweise weist dieser Lumineszenzstoff mehrere spektral voneinander verschiedene Lumineszenzbanden auf, wobei die detektierte erste Lumineszenz spektral innerhalb einer ersten Lumineszenzbande des Lumineszenzstoffs liegt und die detektierte zweite Lumineszenz spektral innerhalb einer zweiten Lumineszenzbande desselben Lumineszenzstoffs liegt.

Wenn die erste und zweite Lumineszenz des Wertdokuments statisch detektiert werden, d.h. ohne Relativbewegung zwischen dem Wertdokument und dem Sensor, so ist der detektierte Intensitätsverlauf der Lumineszenz nicht durch Bewegungseffekte verfälscht. Aus dem statisch detektierten Intensitätsverlauf könnten dann direkt die charakteristischen Zeitkonstanten der ersten und zweiten Lumineszenz, z.B. die Ankling- und/oder Abklingzeit der jeweiligen Lumineszenz ermittelt werden. Im Fall einer Relativbewegung zwischen Wertdokument und Sensor ist der detektierte Intensitätsverlauf jedoch aufgrund von Bewegungseffekten verfälscht. Ein Grund für diese Verfälschung ist, dass der zur Lumineszenz angeregte Bereich des Sicherheitsmerkmals, während des Detektierens des zeitlichen Intensitätsverlaufs der Lumineszenz, aus dem (ortsfesten) Detektionsbereich teilweise heraustransportiert wird.

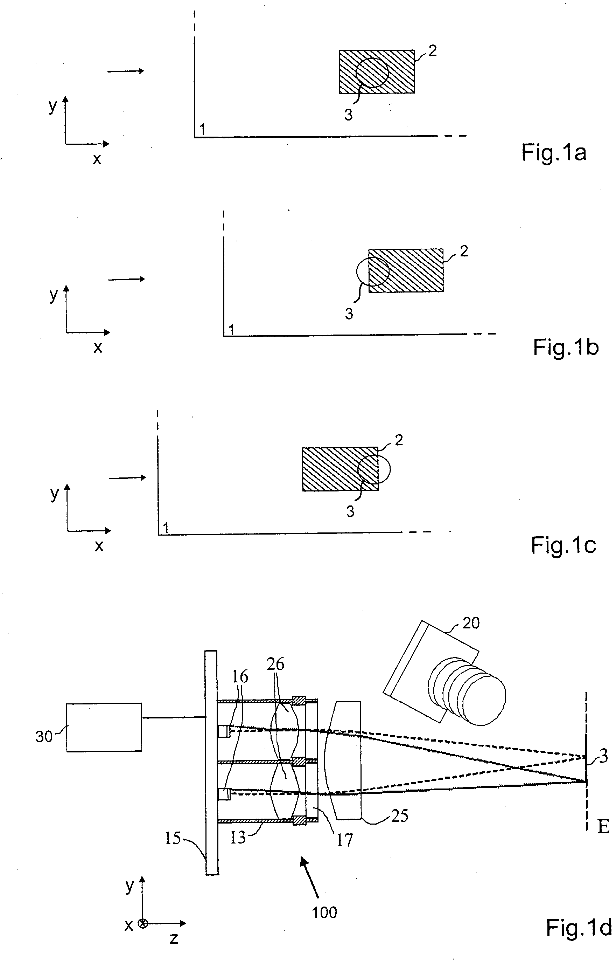

Als Beispiel für den verfälschenden Einfluss der Bewegung wird ein Wertdokument 1 mit einer Druckstruktur 2 betrachtet, die ein lumineszierendes Sicherheitsmerkmal aufweist, vgl. Fig. 1a. Das Wertdokument 1 wird entlang einer Transportrichtung x mit einer Transportgeschwindigkeit v=V0≠0 relativ zu einem Detektionsbereich 3 des Wertdokuments 1 transportiert, dessen Lumineszenz der Sensor detektiert. Zur Anregung der ersten und zweiten Lumineszenz wird das Wertdokument in einem Beleuchtungsbereich mit Anregungslicht beleuchtet, der im Wesentlichen mit dem Detektionsbereich übereinstimmt. Der Beleuchtungsbereich könnte aber auch größer oder kleiner als der Detektionsbereich gewählt werden. Als erstes Beispiel wird angenommen, dass der Detektionsbereich 3 und der Beleuchtungsbereich vollständig innerhalb der Druckstruktur 2 liegen, vgl. Figur 1a. Die Lumineszenz baut sich in diesem Fall während des Anregungspulses auf und wird, bei hohen Transportgeschwindigkeiten, während des Detektierens bereits teilweise aus dem Detektionsbereich 3 heraustransportiert. Deshalb ergibt sich im abklingenden Teil des Intensitätsverlaufs im Fall v=V0 eine geringere Intensität als bei einer Transportgeschwindigkeit v=0. Daher ist die Abklingzeit, die der bei v=V0 detektierte Intensitätsverlauf zeigt, kürzer als die tatsächliche Abklingzeit $\tau_1$, die der Intensitätsverlauf bei v=0 zeigen würde, vgl. Fig. 2b.

Als zweites Beispiel wird angenommen, dass der Detektionsbereich 3 während der bewegten Messung auf eine nachlaufende Kante der Druckstruktur 2 trifft, vgl. Figur 1b. Der hinter der Kante liegende Abschnitt des Detektionsbereichs befindet sich außerhalb der Druckstruktur und ist somit lumineszenzfrei. Das Bewegen der nachlaufenden Kante durch den Detektionsbereich 3 hindurch führt in diesem Fall zu einem noch stärkeren Abklingen des Intensitätsverlaufs während des Detektierens als im Fall v=V0 des ersten Beispiels.

In einem weiteren Beispiel trifft der Detektionsbereich 3 während des Detektierens auf eine vorauslaufende Kante der Druckstruktur 2. Diesmal befindet sich der vor der Kante liegende Abschnitt des Detektionsbereichs außerhalb der Druckstruktur und ist lumineszenzfrei, vgl. Figur 1c. Das Bewegen der vorauslaufenden Kante durch den Detektionsbereich 3 hindurch führt in diesem Fall führt zu einem schwächeren Abklingen des Intensitätsverlaufs als im Fall v=V0 des ersten Beispiels.

Eine Verfälschung durch Bewegungseffekte tritt nicht nur dann auf, wenn das Sicherheitsmerkmal - wie im Fall der Druckstruktur 2 - nur lokal vorhanden bzw. inhomogen auf dem Wertdokument verteilt ist, sondern auch dann, wenn es homogen auf dem Wertdokument verteilt ist. Eine zusätzliche Verfälschung der detektierten Abklingzeit kann sich ergeben, wenn das Sicherheitsmerkmal durch ein anderes Druckbild überdruckt ist.

Zur Detektion der ersten und zweiten Lumineszenz des Sicherheitsmerkmals wird bevorzugt ein Sensor verwendet, der dazu ausgebildet ist, zu denselben Zeitpunkten die erste und zweite Lumineszenz desselben Detektionsbereichs des Wertdokuments zu detektieren, z.B. des Detektionsbereichs 3. Betrachtet man nun eine zweite Lumineszenz eines Lumineszenzstoffs, der dieselbe räumliche Verteilung hat, so wird dessen Intensitätsverlauf in analoger Weise verfälscht wie der Intensitätsverlauf der ersten Lumineszenz, vgl. Figur 2c. Erfindungsgemäß werden daher die beiden Intensitätsverläufe der ersten und zweiten Lumineszenz relativ zueinander ausgewertet. Bei der Auswertung der detektierten Lumineszenz werden der erste und der zweite Intensitätsverlauf zueinander in Beziehung gesetzt. Dadurch werden die Bewegungseffekte, die beide Intensitätsverläufe in gleicher oder zumindest sehr ähnlicher Weise verfälschen, herausgerechnet. Diese relative Auswertung der Intensitätsverläufe ist außerdem unabhängig von der Transportgeschwindigkeit v des Wertdokuments.

Zur Echtheitsprüfung des Wertdokuments wird eine Auswertung der detektierten Intensitätsverläufe durchgeführt. Die Auswertung umfasst die Berechnung einer ersten Kennzahl S1 und einer zweiten Kennzahl S2 mit Hilfe einer skalierungsinvarianten Funktion $S:\mathbf{R}^n \to \mathbf{R}$. Für i=1,2,...,n wird mit Hilfe der skalierungsinvarianten Funktion S aus mehreren ersten Intensitätswerten $y1(t_i)$ der ersten Lumineszenz, die erste Kennzahl S1 berechnet und aus mehreren zweiten Intensitätswerten $y2(t_i)$ der zweiten Lumineszenz wird die zweite Kennzahl $S2=S(y2(t_i))$ berechnet. Der Zähler i nimmt die Werte 1 bis n an, wobei i und n natürliche Zahlen sind. Die Detektionszeitpunkte $t_i$, (i=1,...,n) liegen während eines Anklingens und/oder während eines Abklingens des ersten und zweiten Intensitätsverlaufs. Anschließend wird das Verhältnis V zwischen der ersten Kennzahl S1 und der zweiten Kennzahl S2 bestimmt. Das Verhältnis V ist charakteristisch für das Verhältnis zwischen einer ersten charakteristischen Zeitkonstante $\tau1$ der ersten Lumineszenz und einer zweiten charakteristischen Zeitkonstante $\tau2$ der zweiten Lumineszenz. Das Verhältnis V oder ein von dem Verhältnis V abgeleiteter Wert W werden anschließend dazu verwendet, die Echtheit des Wertdokuments zu prüfen.

Durch die Verhältnisbildung von S1 und S2 wird erreicht, dass sich die Bewegungseffekte, die den detektierten Intensitätsverlauf der ersten und zweiten Lumineszenz gleichermaßen beeinflussen, herausgerechnet werden. Um die Bewegungseffekte herauszurechnen ist es besonders vorteilhaft, dass die zweite Kennzahl $S2(y2(t_i))$ durch dieselbe skalierungsinvariante Funktion S aus den zweiten Intensitätswerten $y2(t_i)$ berechnet wird, durch welche die erste Kennzahl $S1(y1(t_i))$ aus den ersten Intensitätswerten $y1(t_i)$ berechnet wird. Dadurch wird ein genaues Herausrechnen der Bewegungseffekte erreicht. Aufgrund der Skalierungsinvarianz der Funktion S sind die beiden Kennzahlen S1 und S2 unabhängig von der absoluten Höhe der detektierten Intensität. Die Kennzahlen S1 und S2 stellen daher ein relatives Maß für die Form des jeweiligen Intensitätsverlaufs dar.

Bevorzugt ist außerdem, dass die beiden Kennzahlen S1 und S2 nur anhand solcher Intensitätswerte der ersten und zweiten Lumineszenz berechnet werden, die zu denselben Detektionszeitpunkten detektiert wurden. Dadurch wird ein besonders genaues Herausrechnen der Bewegungseffekte erzielt. Die zweiten Intensitätswerte $y2(t_i)$, aus denen die zweite Kennzahl S2 berechnet wird, werden zu denselben Zeitpunkten $t_i$ (i=1, 2,...n) detektiert, wie die ersten Intensitätswerte $y1(t_i)$, aus denen die erste Kennzahl S1 berechnet wird. Die Detektionszeitpunkte $t_i$, deren erste und zweite Intensitätswerte ausgewertet werden, können so gewählt sein, dass sie während des Anklingens des ersten und des zweiten Intensitätsverlaufs liegen. Die Detektionszeitpunkte $t_i$, deren erste und zweite Intensitätswerte ausgewertet werden, können aber auch während des Abklingens des ersten und des zweiten Intensitätsverlaufs liegen. Es ist aber auch möglich, dass diese Detektionszeitpunkte $t_i$ zum Teil während des Anklingens und zum Teil während des Abklingens des ersten und des zweiten Intensitätsverlaufs gewählt sind.

Insbesondere hat die skalierungsinvariante Funktion S die Eigenschaft, dass die erste Kennzahl S1 in Bezug auf die ersten Intensitätswerte $y1(t_i)$ skalierungsinvariant ist und die zweite Kennzahl S2 in Bezug auf die zweiten Intensitätswerte $y2(t_i)$ skalierungsinvariant ist. Die skalierungsinvariante Funktion S hat für alle ersten Intensitätswerte $y1(t_i)$ die Eigenschaft $S(y1)=S(a·y1)$ und für alle zweiten Intensitätswerte $y2(t_i)$ die Eigenschaft $S(y2)=S(a·y2)$, wobei diese Eigenschaft für jede beliebige Zahl a#0 gilt. Die Kennzahl S1 ist daher ein relatives Maß für die Form des ersten Intensitätsverlaufs und unabhängig von der absoluten Höhe der ersten Intensitätswerte, und die Kennzahl S2 ein relatives Maß für die Form des zweiten Intensitätsverlaufs ist und unabhängig von der absoluten Höhe der zweiten Intensitätswerte.

Im Rahmen der Auswertung wird das Verhältnis V=S1/S2 bestimmt und anhand des Verhältnisses V die Echtheit des Wertdokuments geprüft. Zur Auswertung kann das Verhältnis V selbst oder ein aus dem Verhältnis V abgeleiteter Wert, z.B. W=V/(V+1) oder W=1/(V+1) oder W=1/V verwendet werden. Zur Echtheitsprüfung wird das Verhältnis V oder der aus dem Verhältnis V abgeleitete Wert W mit einem Referenzwert R verglichen, der für das Wertdokument oder die jeweilige Sorte des Wertdokuments vorgegeben wurde, oder ein Vergleich mit einer oder mehreren Schwellen durchgeführt. Zum Beispiel kann geprüft werden, ob V bzw. W eine vorgegebene Schwelle übertrifft oder unterschreitet. Es können auch eine untere Schwelle und eine obere Schwelle vorgegeben sein, zwischen denen das Verhältnis V oder der Wert W liegen sollte. Wird bei der Auswertung festgestellt, dass das Verhältnis V oder der Wert W zwischen der oberen und der unteren Schwelle liegt, so wird die Echtheit des Wertdokuments bejaht. Liegt das Verhältnis V oder der Wert W dagegen über der oberen oder unter der unteren Schwelle, so wird die Echtheit des Wertdokuments verneint. Gegebenenfalls wird V oder W vor diesem Vergleich auch mit irgendeinem Faktor verrechnet, z.B. multipliziert oder durch einen Faktor dividiert, oder irgendein Offset addiert oder subtrahiert.

Die erste charakteristische Zeitkonstante $\tau1$ ist z.B. eine Anklingzeit des ersten Intensitätsverlaufs und die zweite charakteristische Zeitkonstante $\tau2$ eine Anklingzeit des zweiten Intensitätsverlaufs. In diesem Fall liegen zumindest einige der Zeitpunkte $t_i$ während des Anklingens des ersten und zweiten Intensitätsverlaufs. Die erste charakteristische Zeitkonstante $\tau1$ kann aber auch eine Abklingzeit des ersten Intensitätsverlaufs sein und die zweite charakteristische Zeitkonstante $\tau2$ eine Abklingzeit des zweiten Intensitätsverlaufs. In diesem Fall liegen zumindest einige der Zeitpunkte $t_i$ während des Abklingens des ersten und zweiten Intensitätsverlaufs.

Im Rahmen der skalierungsinvarianten Funktion S wird der Quotient $P_J/P_K$ zweier linearer Funktionale $P_J$ und $P_K$ gebildet, die jeweils die zu den verschiedenen Zeitpunkten $t_i$ detektierten ersten Intensitätswerte $y1(t_i)$ bzw. zweiten Intensitätswerte $y2(t_i)$ in den Raum der reellen Zahlen abbilden. Zur Berechnung der ersten Kennzahl S1 wird z.B. der Quotient $P_J/P_K$ zweier linearer Funktionale $P_J(y1(t_i))$ und $P_K(y1(t_i))$ gebildet, die jeweils mehrere, zu den verschiedenen Zeitpunkten ti detektierte erste $y1(t_i)$ Intensitätswerte in den Raum der reellen Zahlen abbilden. Auch für die Berechnung der zweiten Kennzahl S2 wird der Quotient $P_J/P_K$ zweier linearer Funktionale $P_J(y2(t_i))$ und $P_K(y2(t_i))$ verwendet, die jeweils mehrere, zu den verschiedenen Zeitpunkten ti detektierte zweite Intensitätswerte $y2(t_i)$ in den Raum der reellen Zahlen abbilden. Bevorzugt wird zur Berechnung der ersten Kennzahl S1 der Quotient derselben zwei linearen Funktionale $P_J$ und $P_K$ verwendet wie zur Berechnung der zweiten Kennzahl S2.

Insbesondere bildet das lineare Funktional $P_J(y1(t_i))$ die zu mehreren Zeitpunkten $t_j$ detektierten ersten Intensitätswerte $y1(t_j)$ in den Raum der reellen Zahlen ab und das lineare Funktional $P_K(y1(t_k))$ die zu anderen Zeitpunkten $t_k$ detektierten ersten Intensitätswerte $y1(t_k)$ in den Raum der reellen Zahlen ab, wobei die Zeitpunkte $t_k$ verschieden sind von den Zeitpunkten $t_j$. Zum Beispiel nimmt der Zähler j die Werte 1,...,(p-1) an und der Zähler k die Werte p,...,n an, wobei 1<p<n und wobei j, k und p natürliche Zahlen sind. Analog bildet das lineare Funktional $P_J(y2(t_i))$ die zu mehreren Zeitpunkten $t_j$ detektierten zweiten Intensitätswerte $y2(t_j)$ in den Raum der reellen Zahlen ab und das lineare Funktional $P_K(y2(t_k))$ die zu anderen Zeitpunkten $t_k$ detektierten zweiten Intensitätswerte $y2(t_k)$ in den Raum der reellen Zahlen ab, wobei die Zeitpunkte $t_k$ verschieden sind von den Zeitpunkten $t_j$. Beispielsweise sind dabei die Auswahl der Zeitpunkte $t_k$ und die Auswahl der Zeitpunkte $t_j$ zueinander disjunkt.

Beispielsweise können die Zeitpunkte $t_j$ einen zusammenhängenden Zeitraum J bilden und/oder die Zeitpunkte $t_k$ können einen zusammenhängenden Zeitraum K bilden. Der Zeitraum J und der Zeitraum K können beide während des Anklingens des ersten und zweiten Intensitätsverlaufs liegen. Alternativ können der Zeitraum J und der Zeitraum K auch während des Abklingens des ersten und zweiten Intensitätsverlaufs liegen. Alternativ kann auch einer der Zeiträume J, K während des Anklingens des ersten und zweiten Intensitätsverlaufs und der andere der Zeiträume J, K während des Abklingens des ersten und zweiten Intensitätsverlaufs liegen. Die Zeitpunkte $t_j$ bzw. $t_k$ können auch in mehreren, nicht-zusammenhängenden Zeiträumen J1, J2,... bzw. K1, K2,... liegen, die im Anklingen und/oder im Abklingen des jeweiligen Intensitätsverlaufs liegen können. Die Zeitpunkte $t_j$ bzw. $t_k$ können jeweils auch diskrete Zeitpunkte sein, die nicht unmittelbar aufeinander folgen. Insbesondere ist es auch möglich, jeweils nur einen einzigen Zeitpunkt $t_j$ und einen einzigen Zeitpunkt $t_k$ zur Berechnung von $P_J$ bzw. $P_K$ zu verwenden.

Die linearen Funktionale $P_J$ und $P_K$ bilden z.B. die Summe oder das Integral der ersten Intensitätswerte bzw. die Summe oder das Integral der zweiten Intensitätswerte, die zu den verschiedenen Zeitpunkten $t_j$ bzw. $t_k$ detektiert werden. Wenn das lineare Funktional $P_J(y1(t_j))$ auf die ersten bzw. zweiten Intensitätswerte $y1(t_j)$ bzw. $y2(t_j)$ angewendet wird, liefert es z.B. die Summe der ersten bzw. zweiten Intensitätswerte aller Zeitpunkte $t_j$, d.h. $P_J(y1(t_j))=\sum_j(y1(t_j))$ bzw. $P_J(y2(t_j))=\sum_j(y2(t_j))$. Und wenn das lineare Funktional $P_K(y1(t_k))$ auf die ersten bzw. zweiten Intensitätswerte $y1(t_k)$ bzw. $y2(t_k)$ angewendet wird, liefert es z.B. die Summe der ersten bzw. zweiten Intensitätswerte aller Zeitpunkte $t_k$, d.h. $P_K(y1(t_k))=\sum_k(y1(t_k))$ bzw. $P_K(y2(t_k))=\sum_k(y2(t_k))$. An Stelle eines Summenfunktionals kann das jeweilige lineare Funktional $P_j$ und $P_K$ aber auch ein Auswertungsfunktional oder ein Ableitungsfunktional oder ein Integralfunktional sein.

In den obigen Beispielen wurde die Auswertung der Lumineszenz zweier verschiedener Spektralbereiche betrachtet. Die Erfindung ist jedoch nicht auf die Auswertung zweier Spektralbereiche beschränkt. Denn es kann auch die Lumineszenz von mehr als zwei Spektralbereichen am selben Ort detektiert und ausgewertet werden. Beispielsweise wird die Lumineszenz am selben Detektionsort gleichzeitig in vier Spektralbereichen detektiert und in die Auswertung einbezogen. Für jeden dieser vier Spektralbereiche wird mittels einer skalierungsinvarianten Funktion S eine Kennzahl bestimmt. Aus den vier Kennzahlen S1, S2, S3 und S4 werden z.B. drei Verhältnisse gebildet, wobei eine beliebige dieser vier Kennzahlen als Bezugsgröße verwendet wird. Wenn die Kennzahl S4 als Bezugsgröße verwendet wird, werden z.B. die drei Verhältnisse V1=S1/S4, V2=S2/S4 und V3=S3/S4 bestimmt. An Stelle der Verhältnisse V1, V2, V3 können natürlich auch davon abgeleitete Werte W1, W2, W3 verwendet werden, die analog zu dem oben genannten W aus dem jeweiligen Verhältnis V1, V2, V3 abgeleitet werden. Zur Echtheitsprüfung wird V1, V2, V3 bzw. W1, W2, W3 anschließend mit einem Referenzwert oder einer oder mehreren Schwellen verglichen.

Zur Auswertung der Kennzahlen S1,...,Sm von m verschiedenen Spektralbereichen kann auch folgendermaßen vorgegangen werden: Zunächst wird für jeden Spektralbereich anhand der Funktion S die jeweilige Kennzahl bestimmt. Von diesen wird die kleinste Kennzahl $S_{min}$ und die größte Kennzahl $S_{max}$ aller m Kennzahlen S1,...,Sm bestimmt: $S_{min}=min(S1,...,Sm)$, $S_{max}=max(S1,...,Sm)$. $S_{min}$ ist z.B. die Kennzahl des Spektralbereichs, der die schnellste charakteristische Zeitkonstante aller m Spektralbereiche hat und Smax ist die Kennzahl des Spektralbereichs, der die langsamste charakteristische Zeitkonstante aller m Spektralbereiche hat. Anschließend wird das Verhältnis V der minimalen Kennzahl und der maximalen Kennzahl berechnet: $V=S_{min}/S_{max}$. V gibt in diesem Fall ein Maß dafür an, wie groß der Zeitbereich ist, den die charakteristischen Zeitkonstanten aufspannen. Zur Echtheitsprüfung wird V bzw. ein davon abgeleiteter Wert W anschließend mit einem Referenzwert oder einer oder mehreren Schwellen verglichen.

Die Erfindung betrifft auch einen Sensor zur Prüfung von Wertdokumenten, der dazu ausgebildet ist, das oben beschriebene Verfahren durchzuführen, um das Wertdokument auf Echtheit zu prüfen. Der Sensor ist zur Prüfung eines in einer Messebene des Sensors vorhandenen Wertdokuments ausgebildet. Der Sensor ist zum Detektieren des Intensitätsverlaufs der ersten und des Intensitätsverlaufs der zweiten Lumineszenz des Wertdokuments als Funktion der Zeit ausgebildet. Zur Prüfung des Wertdokuments wird das Wertdokument entlang der Transportrichtung an dem ortsfesten Sensor vorbeitransportiert. Der Sensor weist eine Auswerteeinrichtung zur Echtheitsprüfung des Wertdokuments auf, die dazu ausgebildet ist, die oben beschriebene Echtheitsprüfung des Wertdokuments durchzuführen. Zu diesem Zweck weist die Auswerteeinrichtung z.B. eine entsprechende Programmierung auf. Und der Sensor weist eine Anregungsquelle auf, die das Wertdokument zur Emission der ersten und der zweiten Lumineszenz anregt. Außerdem weist der Sensor mehrere Photodetektoren zum Detektieren der Lumineszenz des Wertdokuments auf, welches das mit dem Anregungslicht beleuchtete Wertdokument aussendet. Die Anregung der Anregungsquelle ist dazu ausgebildet, eine Lumineszenz des zu prüfenden Wertdokuments derart anzuregen, dass das Wertdokument Lumineszenz emittiert, das durch die Photodetektoren detektierbar ist. Die Anregungsquelle ist z.B. eine Beleuchtungseinrichtung, die das Wertdokument mit Anregungslicht beleuchtet. Alternativ kann die Anregungsquelle auch eine elektrische Anregungsquelle sein, so dass die erste und/oder die zweite Lumineszenz eine Elektrolumineszenz des Wertdokuments sind.

Sensoren, deren Photodetektoren zum selben Zeitpunkt die Lumineszenz desselben Detektionsbereichs des Wertdokuments detektieren, können auf verschiedene Weise realisiert werden. Beispielsweise können die Sensoren im optischen Aufbau des Detektionsstrahlengangs ein Beugungsgitter oder teildurchlässige Strahlteiler aufweisen, durch welche verschiedene Anteile des von dem Wertdokument ausgesendeten Lichts auf verschiedene Photodetektoren gerichtet werden. Derartige Sensoren sind beispielsweise bekannt aus der US7067824 B2 und aus der WO2007/078949 A2.

In einem Ausführungsbeispiel wird dies jedoch in folgender Weise realisiert: Der Sensor weist eine den Photodetektoren gemeinsame Sammeloptik auf, durch welche die in einem Detektionsbereich von dem Wertdokument ausgesendete Lumineszenz zu einem Lichtbündel kollimierbar ist. Jedem der Photodetektoren ist eine Detektorlinse zugeordnet, die ein Teillichtbündel des durch die Sammeloptik kollimierten Lichtbündels aufnimmt und auf den jeweiligen Photodetektor richtet, so dass der Detektionsbereich für die verschiedenen Photodetektoren übereinstimmt. Durch den Sensor können so zum selben Zeitpunkt verschiedene spektrale Anteile des Detektionslichts desselben Detektionsbereichs getrennt voneinander detektiert werden.

Die Erfindung betrifft auch eine Vorrichtung zur Bearbeitung von Wertdokumenten, die einen erfindungsgemäßen Sensor aufweist, welcher zur Durchführung des oben beschriebenen Verfahrens ausgebildet ist. Die Vorrichtung weist z.B. ein Transportsystem zum Vorbeitransportieren der Wertdokumente an dem Sensor entlang einer Transportrichtung auf. Zum Beispiel handelt es sich bei der Vorrichtung um eine Sortiervorrichtung für Wertdokumente.

Nachfolgend wird die Erfindung beispielhaft anhand der folgenden Figuren erläutert. Es zeigen:

| | |
|---|---|
| Figur 1a-c | Detektieren der Lumineszenz einer lumineszierenden Druckstruktur zu drei verschiedenen Zeitpunkten, |
| Figur 1d | Beispiel für einen Sensor, der zur Detektion der ersten und zweiten Lumineszenz zu denselben Zeitpunkten am selben Detektionsort ausgebildet ist, |
| Figur 2a | Anregungspuls der Lumineszenzanregung, |
| Figur 2b-c | zeitlicher Verlauf der Lumineszenzintensität der ersten und zweiten Lumineszenz im Fall einer statischen Prüfung (v=0) und bei einer Transportgeschwindigkeit v=V0, |
| Figur 3 | erstes Beispiel für die ausgewerteten Zeitpunkte des detektierten ersten und zweiten Intensitätsverlaufs, |
| Figur 4 | zweites Beispiel für die ausgewerteten Zeitpunkte des detektierten ersten und zweiten Intensitätsverlaufs, |
| Figur 5 | drittes Beispiel für die ausgewerteten Zeitpunkte des detektierten ersten und zweiten Intensitätsverlaufs. |

Beispielsweise ist der Sensor zur Prüfung des Wertdokuments 1 in einer oder mehreren Messspuren auf dem jeweiligen Wertdokument 1 ausgebildet, wobei für jede der Messspuren jeweils eine Detektionseinrichtung 100 vorgesehen ist. Der Sensor weist eine Lichtquelle 20 zur Lumineszenzanregung und mindestens zwei Photodetektoren 16 auf, vgl. Figur 1d. Vor jedem Photodetektor 16 ist, entlang des Detektionsstrahlengangs betrachtet, jeweils eine Detektorlinse 26 angeordnet. Wie die Photodetektoren 16 sind auch die Detektorlinsen 26 nebeneinander in einer Ebene angeordnet. Um ein Übersprechen in einen anderen der detektierten Spektralbereiche durch Streulicht auszuschließen, sind die Detektorlinsen 26 getrennt voneinander in einer Halterung 13 aus einem lichtundurchlässigen Material aufgenommen.

In der in Figur 1d dargestellten Schnittansicht erkennt man rechts die Messebene E, in der sich ein zu prüfendes Wertdokument 1 befindet, und den in der Messebene E liegenden Detektionsbereich 3 des Wertdokuments, dessen Lumineszenz die Detektionseinrichtung 100 detektiert. Das Lumineszenzlicht des Detektionsbereichs 3 wird durch eine den Photodetektoren 16 gemeinsame Sammellinse 25 zu einem Lichtbündel kollimiert. Die Photodetektoren 16 und die Halterung 13 sind auf einem Träger 15 befestigt. Entlang des Detektionsstrahlengangs betrachtet ist vor jeder Detektorlinse 26 jeweils ein spektrales Filter 17 angeordnet. Die Filter 17 sind für verschiedene Spektralbereiche durchlässig, so dass mit den beiden Photodetektoren 16 zwei verschiedene Spektralkomponenten des Detektionslichts detektiert werden können. Das Lichtbündel wird durch die Anordnung der Detektorlinsen 26 in Teillichtbündel aufgeteilt. Die Zwischenwände der Halterung 13 dienen als Abschirmblenden zwischen den Teillichtbündeln. Durch jeden der Photodetektoren 16 kann auf diese Weise gleichzeitig das Detektionslicht desselben Detektionsbereichs 3 detektiert werden. Der Sensor kann aber auch mehr als zwei Spektralkomponenten gleichzeitig detektieren, wenn das Lichtbündel in der Detektionseinrichtung 100 in mehr als zwei Teillichtbündel aufgeteilt wird und eine entsprechende Anzahl weiterer Detektorlinsen 26 und Photodetektoren 16 vorgesehen wird.

Um nur die Lumineszenz des Wertdokuments zu detektieren, kann im Detektionsstrahlengang zusätzlich ein spektrales Kantenfilter enthalten sein, das allen Photodetektoren gemeinsam ist (nicht gezeigt). Die spektralen Filter 17 sind vorzugsweise Interferenzfilter, welche jeweils für eine andere Spektralkomponente der Lumineszenz durchlässig sind. Die Photodetektoren 16 werden derart angesteuert, dass sie die Lumineszenz des Detektionsbereichs 3 zeitlich synchron zueinander detektieren, zu mehreren Detektionszeitpunkten $t_i$ (i=1,...n). Der Sensor kann auf diese Weise gleichzeitig die Intensitäten von zwei oder (wenn mehr als zwei Photodetektoren vorgesehen sind) mehr als zwei verschiedenen Spektralkomponenten des Detektionslichts desselben Detektionsbereichs 3 detektieren. Alternativ können die spektralen Filter 17 auch zwischen der jeweiligen Detektorlinse 26 und dem jeweiligen Photodetektor 16 angeordnet sein. Oder die verschiedenen spektralen Filter können durch die Detektorlinse 26 selbst gebildet werden. Zusätzlich oder alternativ zu den Filtern 17 können die Photodetektoren 16 verschiedene spektrale Empfindlichkeit aufweisen. Die beiden Photodetektoren 16 aus Figur 1d sind senkrecht zur Transportrichtung x des Wertdokuments zueinander versetzt angeordnet und, entlang der Transportrichtung x betrachtet, an derselben Position angeordnet. Zur Auswertung der von den Photodetektoren 16 detektierten Intensitätswerte werden diese an eine Auswerteeinrichtung 30 übertragen, die die Echtheitsprüfung des Wertdokuments 1 durchführt.

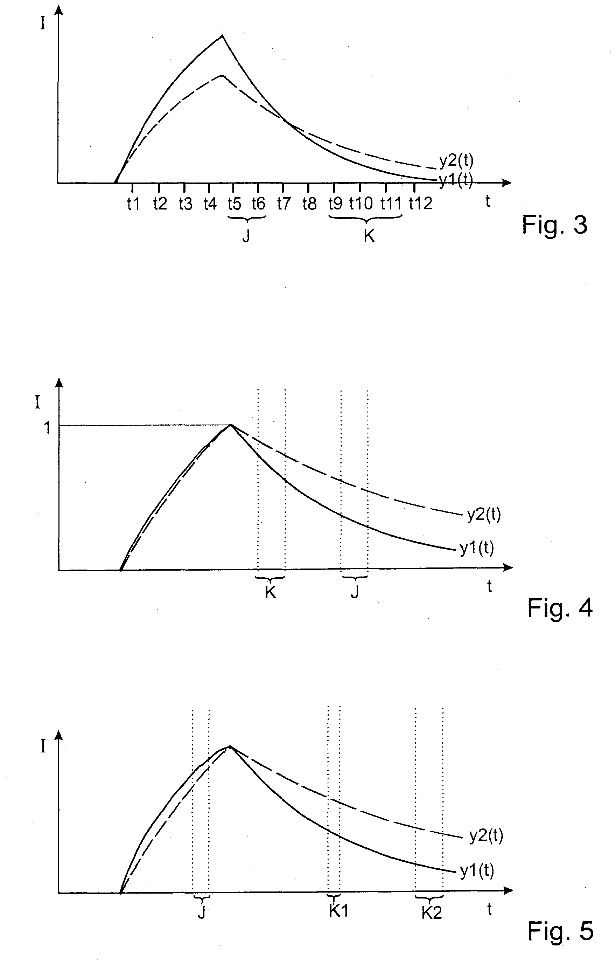

In Figur 3 ist ein Beispiel für die detektierten Intensitätsverlauf der Lumineszenz eines Sicherheitsmerkmals des Wertdokuments 1 gezeigt, die das Sicherheitsmerkmal im Fall einer Transportgeschwindigkeit v=V0#0 emittiert. In einem ersten Spektralbereich wird erste Intensitätsverlauf y1(t) detektiert und in einem (spektral davon abweichenden) zweiten Spektralbereich wird von demselben Sicherheitsmerkmal der zweite Intensitätsverlauf y2(t) detektiert. Zur relativen Auswertung der beiden Intensitätsverläufe werden einerseits die Detektionszeitpunkte t5 und t6 herangezogen, um das lineare Funktional $P_J$(y1(t5), y1(t6)) der ersten Intensitätswerte y1(t5), y1(t6) zu berechnen, und um das lineare Funktional $P_J$(y2(t5), y2(t6)) der zweiten Intensitätswerte y2(t5), y2(t6) zu berechnen. Andererseits werden die Detektionszeitpunkte t9, t10 und t11 herangezogen, um das lineare Funktional $P_K$(y1(t9), y1(t10), y1(t11)) der ersten Intensitätswerte y1(t9), y1(t10), y1(t11) zu berechnen und um das lineare Funktional $P_K$(y2(t9), y2(t10), y2(t11)) der zweiten Intensitätswerte y2(t9), y2(t10), y2(t11) zu berechnen. Beispielsweise ist das lineare Funktional $P_J$ und $P_K$ die Summe der jeweiligen Intensitätswerte:

$$P_J(y1) = \sum_{j=5,6} y1(t_j), \qquad P_K(y1) = \sum_{k=9,10,11} y1(t_k),$$

$$P_J(y2) = \sum_{j=5,6} y2(t_j), \qquad P_K(y2) = \sum_{k=9,10,11} y2(t_k).$$

Mit Hilfe einer skalierungsinvarianten Funktion S: $\mathbf{R}^n \rightarrow \mathbf{R}$ wird aus den Ergebnissen der beiden linearen Funktionale $P_J$(y1) und $P_K$(y1) der ersten Intensitätswerte eine erste Kennzahl S1 berechnet. Die Funktion S bildet z.B. den Quotienten $P_J/P_K$ der Ergebnisse der beiden linearen Funktionale. Die erste Kennzahl S1, die charakteristisch ist für den ersten Intensitätsverlauf y1(t) der ersten Lumineszenz, und die zweite Kennzahl S2, die charakteristisch ist für den zweiten Intensitätsverlauf y2(t) der zweiten Lumineszenz, werden z.B. berechnet durch:

$$S1 = S(y1) = \frac{P_J(y1)}{P_K(y1)} = \frac{\sum_{j=5,6} y1(t_j)}{\sum_{k=9,10,11} y1(t_k)},$$

$$S2 = S(y2) = \frac{P_J(y2)}{P_K(y2)} = \frac{\sum_{j=5,6} y2(t_j)}{\sum_{k=9,10,11} y2(t_k)}.$$

Statt direkt den Quotienten $P_J/P_K$ der aufsummierten Intensitätswerte y1(t) bzw. y2(t) zu verwenden, kann die Funktion S auch umfassen, dass die Intensitätswerte y1(t), y2(t) zuvor mit einem Faktor multipliziert werden.

Die beiden berechneten Kennzahlen S1 und S2 werden anschließend ins Verhältnis zueinander gesetzt. Zur Auswertung wird z.B. deren Verhältnis V=S1/S2 verwendet. Das Verhältnis V bestimmt sich in diesem Fall zu

$$V = \frac{S_1}{S_2} = \frac{\sum_{j=5,6} y1(t_j) / \sum_{k=9,10,11} y1(t_k)}{\sum_{j=5,6} y2(t_j) / \sum_{k=9,10,11} y2(t_k)}.$$

Durch die Verhältnisbildung werden störende Einflüsse, die durch die Bewegung des Wertdokuments zustande kommen und die die detektierten Lumineszenzverläufe y1(t) und y2(t) selbst verfälscht haben, weitgehend herausgerechnet. Das Verhältnis V ist im Beispiel der Figur 3 daher charakteristisch für das Verhältnis zwischen der tatsächlichen Abklingzeit $\tau_1$ der ersten Lumineszenz und der tatsächlichen Abklingzeit $\tau_2$ der zweiten Lumineszenz, vgl. Fig. 2b, 2c.

Statt den Quotienten $P_J/P_K$ zu bilden, kann aber auch eine andere skalierungsinvariante Funktion S zur Berechnung der beiden Kennzahlen S1 und S2 verwendet werden. Wenn man beispielsweise für $P_J$ ein Ableitungsfunktional und für $P_K$ ein Summenfunktional verwendet, erhält man für das Verhältnis V:

$$V = \frac{S_1}{S_2} = \frac{(y1(t_6) - y1(t_5))/((t_6 - t_5) \cdot \sum_{k=9,10,11} y1(t_k))}{(y2(t_6) - y2(t_5))/((t_6 - t_5) \cdot \sum_{k=9,10,11} y2(t_k))}.$$

Durch die Auswertung mit Hilfe einer skalierungsinvarianten Funktion S wird erreicht, dass Störungen oder Mängel des Messsystems, die die Absolutwerte der detektierten Intensitäten beeinflussen, die Auswertung nicht beeinträchtigen.

In Figur 4 ist ein zweites Beispiel mit anderen auszuwertenden Zeitpunkten $t_j$ und $t_k$ dargestellt. In diesem Beispiel werden an Stelle einzelner diskreter Zeitpunkte, quasi kontinuierlich detektierte Intensitätswerte y1(t) und y2(t) ausgewertet. Quasi kontinuierlich bedeutet hier, dass nicht nur einzelne, sondern jeweils eine Vielzahl kurz nacheinander detektierter Intensitätswerte während eines bestimmten Zeitintervalls verwendet werden. Zur Berechnung von $P_J$ der ersten Lumineszenz werden die (auf 1 normierten) Intensitätswerte y1(t) verwendet, die während des Zeitraums J im ersten Spektralbereich detektiert werden und zur Berechnung von $P_J$ der zweiten Lumineszenz werden die (auf 1 normierten) Intensitätswerte y2(t) verwendet, die während des Zeitraums J im zweiten Spektralbereich detektiert werden. Zur Berechnung von $P_K$ werden die jeweiligen Intensitätswerte y1(t) bzw. y2(t) verwendet, die während des Zeitraums K detektiert werden, vgl. Figur 4. Die beiden Kennzahlen S1 und S2 berechnen sich dann wie folgt:

$$S1 = \frac{P_J(y1)}{P_K(y1)} = \frac{\int_J y1(t)dt}{\int_K y1(t)dt},$$

$$S2 = \frac{P_J(y2)}{P_K(y2)} = \frac{\int_J y2(t)dt}{\int_K y2(t)dt}.$$

Nimmt man an, dass der Zeitraum K $50\mu s$ nach Ende der Anregung beginnt, die Zeitdauer des Zeitraums K und J jeweils $50\mu s$ betragen und deren zeitlicher Abstand $100\mu s$ beträgt, so ergeben sich für die Kennzahlen S1 und S2 im Fall des Beispiels aus Figur 4 die Zahlenwerte $S1 \approx 16/34 \approx 0,47$ und $S2 \approx 29/41 \approx 0,70$. Aus S1 und S2 kann dann, auf Basis des Verhältnisses V=S1/S2, z.B. der von V abgeleitete Wert W=V/(V+1) gebildet werden. Beim Beispiel der Figur 4 ergibt sich W=S1/ (S1+S2) $\approx 0,40$, Der von V abgeleitete Wert W ist charakteristisch für das Verhältnis zwischen der (tatsächlichen) Abklingzeit $\tau_1$ der ersten Lumineszenz y1(t) und der (tatsächlichen) Abklingzeit $\tau_2$ der zweiten Lumineszenz y2(t). Allgemein gilt W<0,5, falls die Abklingzeit $\tau_1$ der ersten Lumineszenz y1(t) kleiner ist als die Abklingzeit $\tau_2$ der zweiten Lumineszenz y2(t). Umgekehrt gilt W>0,5, falls die Abklingzeit $\tau_1$ der ersten Lumineszenz y1(t) größer ist als die Abklingzeit $\tau_2$ der zweiten Lumineszenz y2(t). Und es gilt W=0,5, falls die Abklingzeiten der ersten Lumineszenz und der zweiten Lumineszenz y2(t) gleich sind.

Für das Sicherheitsmerkmal, von dem die in Figur 4 gezeigten Intensitätsverläufe detektiert wurden, konnte im Vorfeld der Echtheitsprüfung festgestellt werden, dass es ohne Bewegungseffekte (z.B. durch eine statische Messung ermittelbar), also bei v=0, im ersten Spektralbereich eine Abklingzeit der ersten Lumineszenz y1(t) von $\tau_1 = 200\mu s$ und im zweiten Spektralbereich eine Abklingzeit der zweiten Lumineszenz y2(t) von $\tau_2 = 400\mu s$ aufweist. Auf Basis dieser unverfälschten Abklingzeiten kann ein Referenzwert R für den bei der Auswertung erhaltenen Wert W festgelegt werden. Im Rahmen der Echtheitsprüfung des Wertdokuments kann dann der ermittelte Wert W mit diesem Referenzwert R verglichen werden. Ergibt sich bei dem Vergleich eine zu große Abweichung zwischen W und dem Referenzwert R, so wird die Echtheit des Wertdokuments verneint.

In Figur 5 ist ein drittes Beispiel dargestellt, bei dem für die Auswertung sowohl Zeitpunkte $t_j$ und $t_k$ während als auch nach der Anregung verwendet werden. Auch diesem Beispiel werden quasi kontinuierlich detektierte Intensitätswerte y1(t) und y2(t) ausgewertet. Zur Berechnung von $P_J$ der ersten bzw. zweiten Lumineszenz werden die Intensitätswerte y1(t) bzw. y2(t) verwendet, die während des Zeitraums J im anklingenden Teil des jeweiligen Intensitätsverlaufs y1(t) und y2(t) detektiert werden. Zur Berechnung von $P_K$ werden in diesem Beispiel die jeweiligen Intensitätswerte zweier voneinander getrennter Zeiträume K1 und K2 aufaddiert, die im abklingenden Teil des jeweiligen Intensitätsverlaufs liegen. Die beiden Kennzahlen S1 und S2 berechnen sich dann wie folgt:

$$S1 = \frac{P_J(y1)}{P_K(y1)} = \frac{\int_J y1(t)dt}{\int_{K1} y1(t)dt + \int_{K2} y1(t)dt},$$

$$S2 = \frac{P_J(y2)}{P_K(y2)} = \frac{\int_J y2(t)dt}{\int_{K1} y2(t)dt + \int_{K2} y2(t)dt}.$$

Aus S1 und S2 wird wiederum ein Verhältnis V=S1/S2 gebildet. Da in diesem Beispiel sowohl Intensitätswerte ausgewertet werden, die während des Lumineszenzanklingens detektiert wurden, als auch solche, die während des Lumineszenzabklingens detektiert wurden, ist das Verhältnis V sowohl charakteristisch für die Abklingzeit als auch für die Anklingzeit der ersten Lumineszenz und der zweiten Lumineszenz.

**Patentansprüche**

1. Verfahren zur Echtheitsprüfung von Wertdokumenten, die zu deren Echtheitsprüfung an einem Sensor (100) vorbeitransportiert werden, und die ein Sicherheitsmerkmal (2) aufweisen, das, als Reaktion auf eine Lumineszenzanregung durch eine Anregungsquelle, sowohl eine erste Lumineszenz bei einer ersten Wellenlänge emittiert, die als Funktion der Zeit t einen ersten Intensitätsverlauf y1(t) mit einer ersten charakteristische Zeitkonstante $\tau 1$ aufweist, als auch eine zweite Lumineszenz bei einer von der ersten Wellenlänge verschiedenen zweiten Wellenlänge emittiert, die als Funktion der Zeit t einen zweiten Intensitätsverlauf y2(t) mit einer zweiten charakteristischen Zeitkonstante $\tau 2$ aufweist, mit folgenden Schritten:

   - Detektieren des ersten Intensitätsverlaufs y1(t) und des zweiten Intensitätsverlaufs y2(t) als Funktion der Zeit t am selben Detektionsort des Sicherheitsmerkmals (2) mit Hilfe des Sensors (100),
   - Berechnen einer ersten Kennzahl S1=S(y1(t$_i$)), mit i=1,2,...,n , mit Hilfe einer skalierungsinvarianten Funktion S:$\mathbf{R}^n \rightarrow \mathbf{R}$ aus mehreren ersten Intensitätswerten y1(t$_i$) der ersten Lumineszenz, die zu verschiedenen Zeitpunkten ti während eines Anklingens und/oder während eines Abklingens des ersten Intensitätsverlaufs y1(t) detektiert werden, wobei das Berechnen mit Hilfe einer Auswerteeinrichtung (30) durchgeführt wird,
   - Berechnen einer zweiten Kennzahl S2=S(y2(t$_i$)) mit i=1, 2,...,n, mit Hilfe einer skalierungsinvarianten Funktion S: $\mathbf{R}^n \rightarrow \mathbf{R}$ aus mehreren zweiten Intensitätswerten y2(t$_i$) der zweiten Lumineszenz, die zu den Zeitpunkten t$_i$ während eines Anklingens und/oder während eines Abklingens des zweiten Intensitätsverlaufs y2(t$_i$) detektiert werden, wobei im Rahmen der skalierungsinvarianten Funktion S der Quotient P$_J$/P$_K$ zweier verschiedener linearer Funktionale P$_J$ und P$_K$ gebildet wird, die jeweils die zu den verschiedenen Zeitpunkten ti detektierten ersten Intensitätswerte y1(t$_i$) bzw. zweiten Intensitätswerte y2(t$_i$) in den Raum der reellen Zahlen abbilden, wobei das lineare Funktional P$_J$(y1(t$_i$)) die zu einem oder mehreren Zeitpunkten t$_j$ detektierten ersten Intensitätswerte y1(t$_j$) in den Raum der reellen Zahlen abbildet und das lineare Funktional P$_K$(y1(t$_i$)) die zu einem oder mehreren Zeitpunkten tk detektierten ersten Intensitätswerte y1(t$_k$) in den Raum der reellen Zahlen abbildet, und das lineare Funktional P$_J$(y2(t$_i$)) die zu einem oder mehreren Zeitpunkten t$_j$ detektierten zweiten Intensitätswerte y2(t$_j$) in den Raum der reellen Zahlen abbildet und das lineare Funktional P$_K$(y2(t$_i$)) die zu einem oder mehreren Zeitpunkten t$_k$ detektierten zweiten Intensitätswerte y2(t$_k$) in den Raum der reellen Zahlen abbildet, wobei der/die Zeitpunkt/ e t$_k$ verschieden sind von dem/den Zeitpunkt/en t$_j$, wobei das Berechnen mit Hilfe der Auswerteeinrichtung (30) durchgeführt wird,
   - Bestimmen eines Verhältnisses V zwischen der ersten Kennzahl S1 und der zweiten Kennzahl S2, wobei das Bestimmen mit Hilfe der Auswerteeinrichtung (30) durchgeführt wird,
   - Prüfen der Echtheit des Wertdokuments anhand des Verhältnisses V oder anhand eines von dem Verhältnis V abgeleiteten Werts W, wobei das Verhältnis V oder der von dem Verhältnis V abgeleitete Wert W mit einem Referenzwert oder mit einer oder mehreren Schwellen verglichen wird, wobei das Prüfen mit Hilfe der Auswerteeinrichtung (30) durchgeführt wird.

2. Verfahren nach Anspruch 1, **dadurch gekennzeichnet, dass** die skalierungsinvariante Funktion S die Eigenschaft hat, dass die erste Kennzahl S1 in Bezug auf die ersten Intensitätswerte $y1(t_i)$ skalierungsinvariant ist und die zweite Kennzahl S2 in Bezug auf die zweiten Intensilätswerte $y2(t_i)$ skalierungsinvariant ist.

3. Verfahren nach einem der vorhergehenden Ansprüche, **dadurch gekennzeichnet, dass** zur Berechnung der ersten Kennzahl S1 und der zweiten Kennzahl S2 dieselbe skalierungsinvariante Funktion S verwendet wird.

4. Verfahren nach einem der vorhergehenden Ansprüche, **dadurch gekennzeichnet, dass** zumindest einige der Zeitpunkte $t_i$ während des Anklingens des ersten und zweiten Intensitätsverlaufs liegen und das Verhältnis V ein Maß für das Verhältnis zwischen der Anklingzeit des ersten Intensitätsverlaufs $y1(t)$ und der Anklingzeit des zweiten Intensitätsverlaufs $y2(t)$ ist.

5. Verfahren nach einem der vorhergehenden Ansprüche, **dadurch gekennzeichnet, dass** zumindest einige der Zeitpunkte ti während des Abklingens des ersten und zweiten Intensitätsverlaufs liegen und das Verhältnis V ein Maß für das Verhältnis zwischen der Abklingzeit des ersten Intensitätsverlaufs $y1(t)$ und der Abklingzeit des zweiten Intensitätsverlaufs $y2(t)$ ist.

6. Verfahren nach einem der vorhergehenden Ansprüche, **dadurch gekennzeichnet, dass** die zweiten Intensitätswerte $y2(t_i)$, aus denen die zweite Kennzahl S2 berechnet wird, für i=1,2...,n zu denselben Zeitpunkten $t_i$ detektiert werden wie die ersten Intensitätswerte $y1(t_i)$, aus denen die erste Kennzahl S1 berechnet wird.

7. Verfahren nach einem der vorhergehenden Ansprüche, **dadurch gekennzeichnet, dass**, zur Berechnung der ersten Kennzahl S1, der Quotient $P_J(y1(t_i))/P_K(y1(t_i))$ zweier verschiedener linearer Funktionale $P_J(y1(t_i))$ und $P_K(y1(t_i))$ verwendet wird, die jeweils mehrere, zu den verschiedenen Zeitpunkten $t_i$ detektierte erste $y1(t_i)$ Intensitätswerte in den Raum der reellen Zahlen abbilden, und dass, zur Berechnung der zweiten Kennzahl S2, der Quotient $P_J(y2(t_i))/P_K(y2(t_i))$ zweier verschiedener linearer Funktionale $P_J(y2(t_i))$ und $P_K(y2(t_i))$ verwendet wird, die jeweils mehrere, zu den verschiedenen Zeitpunkten $t_i$ detektierte zweite Intensitätswerte $y2(t_i)$ in den Raum der reellen Zahlen abbilden.

8. Verfahren nach einem der vorhergehenden Ansprüche, **dadurch gekennzeichnet, dass** zur Berechnung der ersten Kennzahl S1 dasselbe lineare Funktional $P_J$ und dasselbe lineare Funktional $P_K$ verwendet wird wie zur Berechnung der zweiten Kennzahl S2, wobei für die erste Kennzahl S1 die linearen Funktionale $P_J$ und $P_K$ anhand der ersten Intensitätswerte $y1(t_i)$ berechnet werden und wobei für die zweite Kennzahl S2 die linearen Funktionale $P_J$ und $P_K$ anhand der zweiten Intensitätswerte $y2(t_i)$ berechnet werden.

9. Verfahren nach einem der vorhergehenden Ansprüche, **dadurch gekennzeichnet, dass** vor dem Vergleichen das Verhältnis V oder der von dem Verhältnis V abgeleitete Wert W mit einem Faktor verrechnet wird oder ein Offset addiert oder subtrahiert wird.

10. Verfahren nach einem der vorhergehenden Ansprüche, **dadurch gekennzeichnet, dass** durch das lineare Funktional $P_J$, angewendet auf die ersten Intensitätswerte $y1(t_j)$, ein Integral oder eine Summe der ersten Intensitätswerte $y1(t_j)$ berechnet wird, und dass durch das lineare Funktional $P_J$, angewendet auf die zweiten Intensitätswerte $y2(t_j)$, ein Integral oder eine Summe der zweiten Intensitätswerte $y2(t_j)$ berechnet wird, und dass durch das lineare Funktional $P_K$, angewendet auf die ersten Intensitätswerte $y1(t_k)$, ein Integral oder eine Summe der ersten Intensitätswerte $y1(t_k)$ berechnet wird, und dass durch das lineare Funktional $P_K$, angewendet auf die zweiten Intensitätswerte $y2(t_k)$, ein Integral oder eine Summe der zweiten Intensitätswerte $y2(t_k)$ berechnet wird, wobei die Zeitpunkte tk verschieden sind von den Zeitpunkten $t_j$.

11. Sensor zur Prüfung von Wertdokumenten (1), umfassend:

- eine Anregungsquelle (20) zum Anregen einer ersten Lumineszenz und einer zweiten Lumineszenz eines Wertdokuments (1), und
- mindestens zwei Photodetektoren (16) zum Detektieren der ersten und zweiten Lumineszenz, die das durch die Anregungsquelle (20) angeregte Wertdokument in einem Detektionsbereich (3) aussendet, wobei die Lumineszenz des Wertdokuments durch die Photodetektoren (16) in mindestens zwei verschiedenen Spektralbereichen detektierbar ist, und wobei der Sensor dazu ausgebildet ist, dass die Photodetektoren (16) jeweils zu denselben Zeitpunkten die Lumineszenz desselben Detektionsbereichs (3) des Wertdokuments detektieren,
- eine Auswerteeinrichtung (30), die dazu ausgebildet ist, eine Echtheitsprüfung des Wertdokuments nach einem der vorhergehenden Ansprüche durchzuführen.

**12.** Vorrichtung zur Prüfung von Wertdokumenten mit einem Sensor gemäß Anspruch 11.

**Claims**

**1.** A method for checking the authenticity of value documents which are transported for their authenticity check past a sensor (100), and which have a security feature (2) which, as a reaction to a luminescence excitation by an excitation source, both emits a first luminescence at a first wavelength which has as a function of time t a first intensity course y1(t) with a first characteristic time constant $\tau 1$ and emits a second luminescence at a second wavelength different from the first wavelength which has as a function of time t a second intensity course y2(t) with a second characteristic time constant $\tau 2$, having the following steps:

- detecting the first intensity course y1(t) and the second intensity course y2(t) as a function of time t at the same detection location of the security feature (2) using the sensor (100),
- computing a first parameter S1=S(y1($t_i$)), with i=1,2,...,n, using a scale-invariant function S:$\mathbf{R}^n \to \mathbf{R}$ from a plurality of first intensity values y1($t_i$) of the first luminescence which are detected at different time points $t_i$ during a rise and/or during a decay of the first intensity course y1(t), wherein the computing is carried out with the help of an evaluation device (30),
- computing a second parameter S2=S(y2($t_1$))) with i=1,2,...,n, using a scale-invariant function S: $\mathbf{R}^n \to \mathbf{R}$ from a plurality of second intensity values y2($t_i$) of the second luminescence which are detected at the time points $t_i$ during a rise and/or during a decay of the second intensity course y2($t_i$),

wherein within the context of the scale-invariant function S there is formed the quotient $P_J/P_K$ of two linear functionals $P_J$ and $P_K$ which respectively map the first intensity values y1($t_i$) or second intensity values y2($t_i$) detected at the different time points $t_i$ to the space of real numbers, wherein the linear functional $P_J$(y1($t_j$)) maps the first intensity values y1($t_j$) detected at one or a plurality of time points $t_j$ to the space of real numbers, and that the linear functional $P_K$((y1($t_i$) maps the first intensity values y1($t_k$) detected at a plurality of time points $t_k$ to the space of real numbers, and that the linear functional $P_J$(y2($t_i$)) maps the second intensity values y2($t_j$) detected at one or a plurality of time points $t_j$ to the space of real numbers, and that the linear functional $P_K$((y2($t_i$)) maps the second intensity values y2($t_k$) detected at one or a plurality of time points $t_k$ to the space of real numbers, wherein the time point/points $t_k$ are different from the time point/points $t_j$, wherein the computing is carried out with the help of an evaluation device (30),

- determining a ratio V between the first parameter S1 and the second parameter S2, wherein the determining is carried out with the help of an evaluation device (30),
- checking the authenticity of the value document using the ratio V or using a value W derived from the ratio V, wherein the ratio V or the value W derived from the ratio V are compared with a reference value or with one or more thresholds, wherein the computing is carried out with the help of an evaluation device (30).

**2.** The method according to claim 1, **characterized in that** the scale-invariant function S has the property that the first parameter S1 is scale-invariant with regard to the first intensity values y1($t_i$) and the second parameter S2 is scale-invariant with regard to the second intensity values y2($t_i$).

**3.** The method according to either of the preceding claims, **characterized in that** the same scale-invariant function S is employed for computing the first parameter S1 and the second parameter S2.

**4.** The method according to any of the preceding claims, **characterized in that** at least some of the time points $t_i$ lie during the rise of the first and second intensity courses and the ratio V is a measure of the ratio between the rise time of the first intensity course y1(t) and the rise time of the second intensity course y2(t).

**5.** The method according to any of the preceding claims, **characterized in that** at least some of the time points $t_i$ lie during the decay of the first and second intensity courses and the ratio V is a measure of the ratio between the decay time of the first intensity course y1(t) and the decay time of the second intensity course y2(t).

**6.** The method according to any of the preceding claims, **characterized in that** the second intensity values y2($t_i$) from which the second parameter S2 is computed are detected for i=1,2,...,n at the same time points $t_i$ as the first intensity values y1($t_i$) from which the first parameter S1 is computed.

**7.** The method according to any of the preceding claims, **characterized in that**, for computing the first parameter S1, there is employed the quotient $P_J(y1t_i))/P_K(y1(t_i))$ of two different linear functionals $P_J(y1(t_i))$ and $P_K(y1(t_i))$ which respectively map a plurality of first $y1(t_i)$ intensity values detected at the different time points $t_i$ to the space of real numbers, and that, for computing the second parameter S2, there is employed the quotient $P_J(y2(t_i))/P_K(y2(t_i))$ of two different linear functionals $P_J(y2(t_i))$ and $P_K(y2(t_i))$ which respectively map a plurality of second intensity values $y2(t_i)$ detected at the different time points $t_i$ to the space of real numbers.

8. The method according to any of the preceding claims, **characterized in that** for computing the first parameter S1 the same linear functional $P_J$ and the same linear functional $P_K$ is employed as for computing the second parameter S2, there being computed for the first parameter S1 the linear functionals $P_J$ and $P_K$ using the first intensity values $y1(t_i)$ and there being computed for the second parameter S2 the linear functionals $P_J$ and $P_K$ using the second intensity values $y2(t_i)$.

9. Method according to one of the preceding claims, **characterized in that** before comparing, the ratio V or the value W derived from the ratio V is computed with a factor or an offset is added or subtracted.

10. The method according to any of the preceding claims, **characterized in that** an integral or a sum of the first intensity values $y1(t_j)$ is computed through the linear functional $P_J$, applied to the first intensity values $y1(t_j)$, and that an integral or a sum of the second intensity values $y2(t_j)$ is computed through the linear functional $P_J$, applied to the second intensity values $y2(t_j)$, and that an integral or a sum of the first intensity values $y1(t_k)$ is computed through the linear functional $P_K$, applied to the first intensity values $y1(t_k)$, and that an integral or a sum of the second intensity values $y2(t_k)$ is computed through the linear functional $P_K$, applied to the second intensity values $y2(t_k)$, with the time points $t_k$ being different from the time points $t_j$.

11. A sensor for checking value documents (1), comprising:

- an excitation source (20) for exciting a first luminescence and a second luminescence of a value document (1), and
- at least two photodetectors (16) for detecting the first and second luminescences which the value document excited by the excitation source (20) emits in a detection region (3), with the luminescence of the value document being detectable by the photodetectors (16) in at least two different spectral regions, and with the sensor being configured such that the photodetectors (16) respectively detect the luminescence of the same detection region (3) of the value document at the same time points,
- an evaluation device (30) which is configured for carrying out an authenticity check of the value document according to any of the previous claims.

12. An apparatus for checking value documents having a sensor according to claim 11.

**Revendications**

1. Procédé de vérification de l'authenticité de documents de valeur qui, pour la vérification d'authenticité, sont transportés en passant par un capteur (100), et qui comportent une caractéristique de sécurité (2) qui, comme réaction à une excitation en luminescence par une source d'excitation, émet non seulement une première luminescence à une première longueur d'onde, laquelle, en tant que fonction du temps t, présente une première courbe d'intensité $y1(t)$ ayant une première constante caractéristique de temps $\tau1$, mais émet aussi une deuxième luminescence à une deuxième longueur d'onde différente de la première longueur d'onde, laquelle, en tant que fonction du temps t, présente une deuxième courbe d'intensité $y2(t)$ ayant une deuxième constante caractéristique de temps $\tau2$, comprenant les étapes suivantes :

- détection de la première courbe d'intensité $y1(t)$ et de la deuxième courbe d'intensité $y2(t)$ en tant que fonction du temps t au même endroit de détection de la caractéristique de sécurité (2) à l'aide du capteur (100),
- calcul d'un premier indicatif $S1=S(y1(t_i))$, avec i=1,2...,n, à l'aide d'une fonction invariante d'échelle $S:\mathbf{R}^n \rightarrow \mathbf{R}$ de plusieurs premières valeurs d'intensité $y1(t_i)$ de la première luminescence qui sont détectées à différents moments $t_i$ pendant une ascension et/ou pendant un déclin de la première courbe d'intensité $y1(t)$, cependant que le calcul est effectué à l'aide d'un dispositif d'évaluation (30),
- calcul d'un deuxième indicatif $S2=S(y2(t_i))$, avec i=1,2...,n, à l'aide d'une fonction invariante d'échelle $S:\mathbf{R}^n \rightarrow \mathbf{R}$ de plusieurs deuxièmes valeurs d'intensité $y2(t_i)$ de la deuxième luminescence qui sont détectées aux moments $t_i$ pendant une ascension et/ou pendant un déclin de la deuxième courbe d'intensité $y2(t_i)$, cependant que, dans

le cadre de la fonction S invariante d'échelle, le quotient $P_J/P_K$ de deux fonctionnelles linéaires différentes $P_J$ et $P_K$ qui appliquent respectivement dans l'espace des nombres réels les premières valeurs d'intensité $y1(t_i)$ ou les deuxièmes valeurs d'intensité $y2(t_i)$ détectées aux différents moments $t_i$ est formé, cependant que la fonctionnelle linéaire $P_J(y1(t_i))$ applique dans l'espace des nombres réels les premières valeurs d'intensité $y1(t_j)$ détectées à un ou à plusieurs moments $t_j$, et que la fonctionnelle linéaire $P_K(y1(t_i))$ applique dans l'espace des nombres réels les premières valeurs d'intensité $y1(t_k)$ détectées à un ou à plusieurs moments $t_k$, et que la fonctionnelle linéaire $P_J(y2(t_i))$ applique dans l'espace des nombres réels les deuxièmes valeurs d'intensité $y2(t_j)$ détectées à un ou à plusieurs moments $t_j$, et que la fonctionnelle linéaire $P_K(y2(t_i))$ applique dans l'espace des nombres réels les deuxièmes valeurs d'intensité $y2(t_k)$ détectées à un ou à plusieurs moments $t_k$, cependant que le / les moments $t_k$ sont différents du / des moments $t_j$, cependant que le calcul est effectué à l'aide du dispositif d'évaluation (30),

- détermination d'un rapport V entre le premier indicatif S1 et le deuxième indicatif S2, cependant que la détermination est effectuée à l'aide du dispositif d'évaluation (30),

- vérification de l'authenticité du document de valeur à l'aide du rapport V ou à l'aide d'une valeur W dérivée du rapport V, cependant que le rapport V ou la valeur W dérivée du rapport V est comparé(e) avec une valeur de référence ou avec un ou plusieurs seuils, cependant que la vérification est effectuée à l'aide du dispositif d'évaluation (30).

2. Procédé selon la revendication 1, **caractérisé en ce que** la fonction invariante d'échelle S a la propriété que le premier indicatif S1 est invariant d'échelle par rapport aux premières valeurs d'intensité $y1(t_i)$ et que le deuxième indicatif S2 est invariant d'échelle par rapport aux deuxièmes valeurs d'intensité $y2(t_i)$.

3. Procédé selon une des revendications précédentes, **caractérisé en ce que**, pour le calcul du premier indicatif S1 et du deuxième indicatif S2, la même fonction invariante d'échelle S est utilisée.

4. Procédé selon une des revendications précédentes, **caractérisé en ce qu'**au moins quelques uns des moments $t_i$ se situent pendant l'ascension de première et de la deuxième courbe d'intensité, et que le rapport V est une mesure pour le rapport entre le temps d'ascension de la première courbe d'intensité $y1(t)$ et le temps d'ascension de la deuxième courbe d'intensité $y2(t)$.

5. Procédé selon une des revendications précédentes, **caractérisé en ce qu'**au moins quelques uns des moments $t_i$ se situent pendant le déclin de première et de la deuxième courbe d'intensité, et que le rapport V est une mesure pour le rapport entre le temps de déclin de la première courbe d'intensité $y1(t)$ et le temps de déclin de la deuxième courbe d'intensité $y2(t)$.

6. Procédé selon une des revendications précédentes, **caractérisé en ce que** les deuxièmes valeurs d'intensité $y2(t_i)$ à partir desquelles le deuxième indicatif S2 est calculé sont, pour i=1,2...,n, détectées aux mêmes moments $t_i$ que les premières valeurs d'intensité $y1(t_i)$ à partir desquelles le premier indicatif S1 est calculé.

7. Procédé selon une des revendications précédentes, **caractérisé en ce que**, pour le calcul du premier indicatif S1, le quotient $P_J(y1(t_i))/P_K(y1(t_i))$ de deux fonctionnelles linéaires différentes $P_J(y1(t_i))$ et $P_K(y1(t_i))$ est utilisé, lesquelles appliquent respectivement dans l'espace des nombres réels plusieurs deuxièmes valeurs d'intensité $y1(t_i)$ détectées aux différents moments $t_i$ et que, pour le calcul du deuxième indicatif S2, le quotient $P_J(y2(t_i))/P_K(y2(t_i))$ de deux fonctionnelles linéaires différentes $P_J(y2(t_i))$ et $P_K(y2(t_i))$ est utilisé, lesquelles appliquent respectivement dans l'espace des nombres réels plusieurs deuxièmes valeurs d'intensité $y2(t_i)$ détectées aux différents moments $t_i$.

8. Procédé selon une des revendications précédentes, **caractérisé en ce que**, pour le calcul du premier indicatif S1, la même fonctionnelle linéaire $P_J$ et la même fonctionnelle linéaire $P_K$ que pour le calcul du deuxième indicatif S2 est utilisée, cependant que, pour le premier indicatif S1, les fonctionnelles linéaires $P_J$ et $P_K$ sont calculées à l'aide des premières valeurs d'intensité $y1(t_i)$, et cependant que, pour le deuxième indicatif S2, les fonctionnelles linéaires $P_J$ et $P_K$ sont calculées à l'aide des deuxièmes valeurs d'intensité $y2(t_i)$.

9. Procédé selon une des revendications précédentes, **caractérisé en ce que**, avant la comparaison, le rapport V ou la valeur W dérivée du rapport V est décomptée avec un facteur ou qu'un offset est additionné ou soustrait.

10. Procédé selon une des revendications précédentes, **caractérisé en ce que**, par la fonctionnelle linéaire $P_J$, appliquée sur les premières valeurs d'intensité $y1(t_j)$, une intégrale ou une somme des premières valeurs d'intensité $y1(t_j)$ est calculée, et que, par la fonctionnelle linéaire $P_J$, appliquée sur les deuxièmes valeurs d'intensité $y2(t_j)$, une intégrale

ou une somme des deuxièmes valeurs d'intensité y2($t_j$) est calculée, et que, par la fonctionnelle linéaire $P_K$, appliquée sur les premières valeurs d'intensité y1($t_k$), une intégrale ou une somme des premières valeurs d'intensité y1($t_k$) est calculée, et que, par la fonctionnelle linéaire $P_K$, appliquée sur les deuxièmes valeurs d'intensité y2($t_k$), une intégrale ou une somme des deuxièmes valeurs d'intensité y2($t_k$) est calculée, cependant que les moments $t_k$ sont différents des moments $t_j$.

11. Capteur pour la vérification de documents de valeur (1), comprenant :

- une source d'excitation (20) pour l'excitation d'une première luminescence et d'une deuxième luminescence d'un document de valeur (1), et
- au moins deux photodétecteurs (16) pour la détection de la première et de la deuxième luminescence qu'un document de valeur excité par la source d'excitation (20) émet dans une zone de détection (3), cependant que la luminescence du document de valeur peut être détectée par les photodétecteurs (16) dans au moins deux domaines spectraux différents, et que le capteur est conçu pour que les photodétecteurs (16) détectent respectivement aux mêmes moments la luminescence de la même zone de détection (3) du document de valeur,
- un dispositif d'évaluation (30) conçu pour exécuter selon une des revendications précédentes une vérification de l'authenticité du document de valeur.

12. Dispositif de vérification de documents de valeur ayant un capteur selon la revendication 11.

Fig.1a

Fig.1b

Fig.1c

Fig.1d

Fig. 2a

Fig. 2b

Fig. 2c

16

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10113268 A1
- US 7067824 B2
- WO 2007078949 A2